Europäisches Patentamt

European Patent Office

Office européen des brevets·

(19)

(11) Veröffentlichungsnummer: **0 169 982**

**A2**

(12) # EUROPÄISCHE PATENTANMELDUNG

(21) Anmeldenummer: 85104963.5

(22) Anmeldetag: 24.04.85

(51) Int. Cl.⁴: **F 27 B 1/10**
**F 27 B 9/14**

(30) Priorität: 05.06.84 DE 3420871

(43) Veröffentlichungstag der Anmeldung:
05.02.86 Patentblatt 86/6

(84) Benannte Vertragsstaaten:
BE DE FR GB IT

(71) Anmelder: Deutsche Babcock Anlagen
Aktiengesellschaft
Duisburger Strasse 375
D-4200 Oberhausen 1(DE)

(72) Erfinder: Wischniewski, Martin
Fabritiusstrasse 38
D-4150 Krefeld 11(DE)

(72) Erfinder: Kleinbrahm, Achim
Breslauer Strasse 78
D-4150 Krefeld 11(DE)

(72) Erfinder: Meinhardt, Horst
Sandberg 82
D-4150 Krefeld(DE)

(72) Erfinder: Hell, Uwe
Engelsberg 13
D-4130 Moers(DE)

(72) Erfinder: Gies, Wolfgang
Liesentorweg 8a
D-4150 Krefeld-Traar(DE)

(74) Vertreter: Planker, Karl-Josef, Dipl.-Phys.
c/o BABCOCK-BSH AKTIENGESELLSCHAFT Parkstrasse
29 Postfach 4 + 6
D-4150 Krefeld 11(DE)

(54) Schachtofen.

(57) Erfindungsgegenstand ist ein Schachtofen zur Herstellung von Zuschlagstoffen aus keramischem Rohmaterial. Das Innere des Schachtes (3) ist durch eine größere Anzahl von waagerechten Böden (8a bis 81) in Kammern (9a bis 91) unterteilt. Jeder Boden besteht aus mehreren nebeneinander liegenden, langgestreckten Bodenelementen (10), die in regelmäßigen Zeitabständen um ihre Längsachse gekippt werden, um den Durchfall des Materials zu ermöglichen. Das Schachtinnere ist in mehrere Zonen unterteilt, z.B. in eine Vorwärmzone (30), eine Reaktionszone (31) und eine Kühlzone (32).

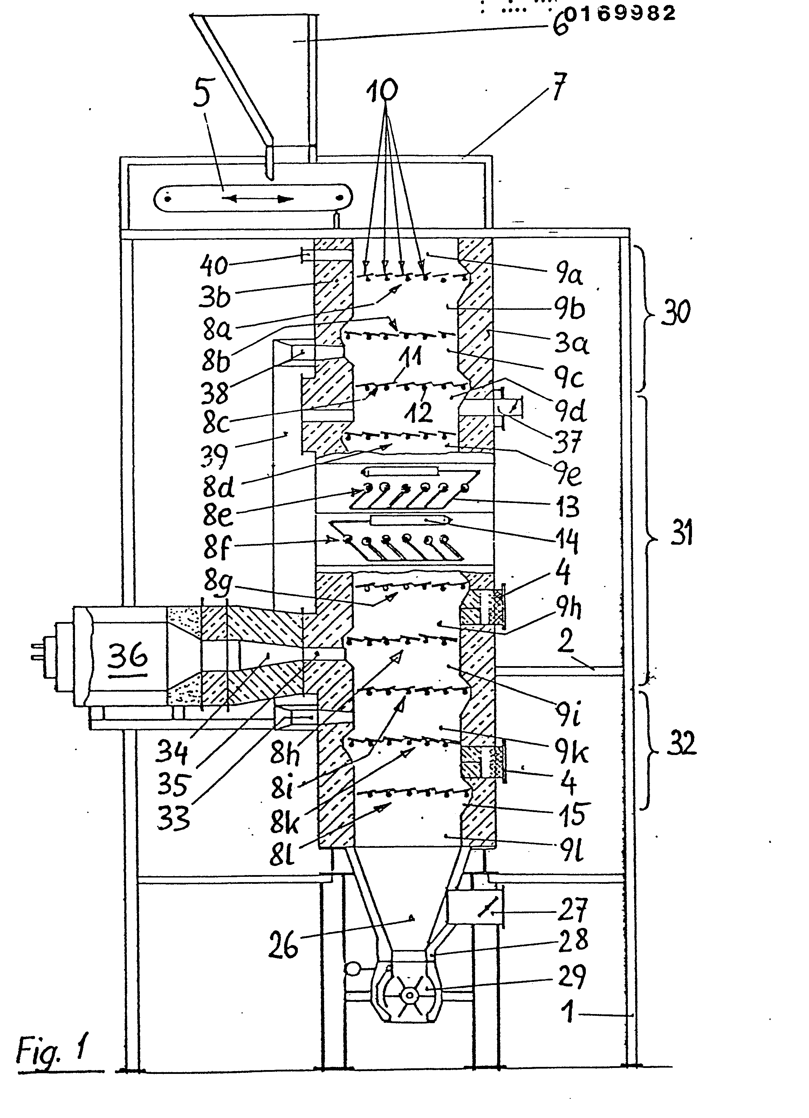

Benachbarte Zonen sind jeweils durch mindestens einen relativ gasundurchlässigen Boden (8c, 8i) voneinander getrennt. Innerhalb jeder zone gibt es mindestens einen gasdurchlässigen Boden (8a, 8b, 8d in Figur 1, 8e bis 8h, 8k, 8l). Jede Zone hat in ihrem unteren Bereich einen Gaseinlaß und in ihrem oberen Bereich einen Gasauslaß. Insbesondere in der Reaktionszone sind noch weitere Gaseinlässe vorgesehen. Der Schachtofen ermöglicht eine exakte Führung der Verfahrensbedingungen in den einzelnen Behandlungsstufen ohne unerwünschte gegenseitige Beeinflussung.

EP 0 169 982 A2

./...

Fig. 1

Deutsche Babcock Anlagen
Aktiengesellschaft
Duisburger Straße 375
4200 Oberhausen 1

Schachtofen

Die Erfindung betrifft einen Schachtofen gemäß dem Oberbegriff des Patentanspruchs 1.

Die Herstellung von Bauzuschlagstoffen aus tonhaltigen Rohstoffen oder Abfallstoffen wird voraussichtlich in den kommenden Jahren zunehmende Bedeutung erlangen, da in vielen Gebieten die Reserven an Kies für die Betonherstellung allmählich knapper werden, in anderen Gebieten Kiesvorkommen überhaupt nicht vorhanden sind. Der Herstellungsprozeß umfasst eine Wärmebehandlung, die in erster Linie eine Verbesserung der Festigkeit und eine Herabsetzung der Wasseraufnahme bezweckt. Es hat sich herausgestellt, daß bei dieser Wärmebehandlung eine exakte Temperaturführung von ausschlaggebender Bedeutung ist, und zwar sowohl für die Qualität des Produktes als auch für einen störungsfreien Betriebsablauf.

Als Rohstoffe bieten sich in Ländern, die über einen eigenen Steinkohleabbau verfügen, vor allem die Waschberge aus der Kohleaufbereitung an.
Durch die Verwertung dieses Abfallstoffs hofft man gleichzeitig der Lösung des Deponieproblems einen erheblichen Schritt näher zu kommen.
Der Kohlegehalt der Waschberge ist durchweg noch so groß, daß er nicht nur
den Wärmebedarf des Verfahrens deckt, sondern auch noch die Gewinnung von
Überschusswärme erlaubt. Gerade bei brennstoffhaltigem Ausgangsmaterial
ist aber eine exakte Temperaturführung überaus wichtig und gleichzeitig
überaus schwierig.

Bei einem Verfahren, das durch die DE-PS 927 136 bekannt geworden ist,
werden Abfallprodukte der Kohlenaufbereitung oder andere minderwertige
Brennstoffe zunächst zur vollständigen Ausnutzung ihrer Wärmeenergie in
einem Wirbelschichtofen vorverbrannt und erst dann in einer Sinteranlage
gesintert. Im Wirbelschichtofen lassen sich durch verschiedene Maßnahmen,
wie z. B. Kühlen des Bettes, Veränderung der Luftzufuhr, Einspritzen von
Wasser die Verbrennungsbedingungen und die Abgastemperaturen regulieren.
Das heiße Abgas des Wirbelschichtofens kann beim Betrieb eines gasbeheizten
Sinterbandes verwendet werden. Dieses Verfahren ist für grobkörnige Ausgangsstoffe, wie Waschberge, mit einer Korngröße bis zu 6 cm nicht geeignet.

Gemäß DE-PS 840 539 wird das grobkörnige Rohmaterial zunächst in einem
Schachtofen einer Vergasung unterworfen, danach zerkleinert und schließlich in 3 hintereinandergeschalteten Drehtrommeln verbrannt, geglüht und
gekühlt. Dieses Verfahren erleichtert zwar durch die Trennung der verschiedenen Stufen eine exakte Temperaturführung, erfordert aber beträchtliche Investitions- und Betriebskosten. Das Produkt fällt nicht in der für
die Betonherstellung gewünschten Korngrößenverteilung an.

Durch die DE-PS 11 65 477 ist es bekannt, Zuschlagstoffe aus blähfähigem
Ton- oder Schieferabfall in einem einzigen Aggregat herzustellen, und zwar
in einem Schachtofen der im Oberbegriff des Anspruchs 1 angegebenen Gattung.

0169982

Bei diesem vorbekannten Ofen bilden die obersten drei Etagen eine Vorwärmezone. Darunter schließt sich eine aus einer größeren Anzahl von Etagen bestehende Reaktionszone an. Die unterste Kammer ist als Kühlzone ausgebildet. Die zur Reaktionszone gehörenden Etagen sind mit Düsen ausgestattet, durch die Heizöl zugeführt wird. Ober die Zuführung der Verbrennungsluft und der Kühlluft, die Gasführung im Ofen und den Weg des Abgases lassen sich aus dieser Druckschrift keinerlei Hinweise entnehmen, ebenso wenig über eine etwaige Nutzung der vom Abgas mitgeführten Wärme. Ober die Böden der einzelnen Kammern kann man der Druckschrift im wesentlichen nur entnehmen, daß sie aus etwa 10 cm breiten Streifen bestehen, die aus hitzebeständigem Material hergestellt sind. Die Schrift enthält aber keine Lösung für die Werkstoff- und Konstruktionsprobleme, die sich in diesem Zusammenhang ergeben. Bei der angegebenen Materialtemperatur bis zu 1150°C haben die üblichen hitzebeständigen Stähle, die unter Berücksichtigung des Preises für diesen Zweck in Betracht kommen, keine ausreichende Festigkeit mehr. Das Problem läßt sich auch nicht ohne weiteres lösen, indem man - über den Inhalt der Druckschrift hinausgehend - eine Kühlung der Streifen in Betracht zieht. Denn eine für die statischen Belange ausreichende Kühlung der Streifen würde bewirken, daß das unmittelbar auf den Streifen liegende Material Wärme an die gekühlten Streifen abgibt und daher nicht die vorgeschriebene Behandlungstemperatur erreicht. Es ist aber bekannt, daß bei der keramisierenden Behandlung von tonigen Rohstoffen die Temperatur in einem sehr engen Toleranzbereich geführt werden muß.

Bei einem ähnlich aufgebauten Ofen gemäß DE-AS 12 43 827, der allerdings nur eine einzige, aus mehreren Etagen bestehende Behandlungszone aufweist, hat jede Etage eine seitliche Eintrittsöffnung für das heiße Behandlungsgas.

Die Gasführung innerhalb des Ofens ist nicht erkennbar. Es wird lediglich gesagt, daß das Gas zur Vorwärmung des Gutes genutzt wird. Diese findet aber nicht in dem Schachtofen statt, sondern in einem dem Ofen vorgeschalteten System von Förderschnecken. Die stabförmigen Elemente, aus denen die einzelnen Böden bestehen, haben bei diesem Ofen einen kreuz- oder ypsilonförmigen Querschnitt.

Der Erfindung liegt die Aufgabe zugrunde, einen Schachtofen der im Oberbegriff des Patentanspruchs 1 angegebenen Gattung zu schaffen, in dem die Verfahrensbedingungen, insbesondere die Temperatur, in den einzelnen Stufen exakt und ohne unerwünschte gegenseitige Beeinflußung geführt werden können.

Diese Aufgabe wird erfindungsgemäß durch die kennzeichnenden Merkmale des Patentanspruchs 1 gelöst. In dem erfindungsgemäßen Schachtofen besteht innerhalb der einzelnen Zonen eine definierte, die gasdurchlässigen Böden durchdringende, aufwärts gerichtete Gasströmung. Die zwischen den einzelnen Zonen angeordneten Böden sind relativ gasundurchlässig, d. h. ihre Gasdurchlässigkeit ist in der Ruhestellung erheblich geringer als die der übrigen Böden. Dadurch wird verhindert, daß das Gas aus einer Zone in einer verfahrenstechnisch erheblichen Menge in die benachbarte Zone gelangt.

Durch die Ausbildung von Schleusenkammern gem. Anspruch 2 wird die verfahrenstechnische Trennung benachbarter Zonen weiter vervollkommnet. Insbesondere wird verhindert, daß während der Kippbewegung eines relativ gasundurchlässigen Bodens Gas in nennenswerter Menge von einer Zone in die Nachbarzone eindringt.

Ein bevorzugtes Ausführungsbeispiel des Schachtofens ist in Anspruch 3 angegeben.

Das Merkmal des Anspruchs 4 ermöglicht eine zusätzliche Beeinflussung der Verfahrensbedingungen innerhalb der Reaktionszone durch Einleiten von Gasströmen.

Gemäß Anspruch 5 wird die vom Abgas der Kühlzone mitgeführte Wärme in der Vorwärmzone genutzt.

Gemäß Anspruch 6 wird zumindest ein Teil der von den Rauchgasen der Reaktionszone mitgeführten Wärme wieder in die Reaktionszone zurückgeführt. Dabei wird durch Zumischen der Rauchgase eines Brenners die Temperatur auf das für die Keramisierung erforderliche Niveau angehoben.

Durch das Merkmal des Anspruchs 7 wird die Materialverteilung vergleichmäßigt und vor allem im Bereich der unteren Böden die Tendenz zur einseitigen Materialanhäufung vermieden.

Durch das Merkmal des Anspruchs 8 wird der kritische Spalt zwischen Boden und Schachtwand weitgehend von Material freigehalten; dadurch wird die Beweglichkeit des wandnahen Bodenelementes aufrechterhalten.

Bei der in Anspruch 9 angegebenen bevorzugten konstruktiven Ausführung des Bodenelementes ist das thermisch hoch beanspruchte Auflagerelement, auf dem im Betrieb das heiße Material ruht, durch ein Tragrohr mit hoher Biegefestigkeit abgestützt.

Durch das Merkmal des Anspruchs 10 ist es möglich, auch in der besonders heißen Zone des Ofens eine hohe Biegesteifigkeit der Tragrohre zu gewährleisten.

Eine besonders stabile Ausführung des Bodenelementes ist in Anspruch 11 angegeben; dabei wird auch das zusätzliche Versteifungsrohr zwangsläufig vom Kühlmedium durchströmt.

Bei der in Anspruch 12 angegebenen Ausführung wird in Querrichtung des Auflagerelements das maximale Biegemoment so klein wie möglich gehalten.

Das Merkmal des Anspruchs 13 erlaubt eine kräftige Kühlung des Tragrohres und gegebenenfalls des Versteifungsrohres, ohne daß das auf dem Auflagerelement liegende Material mitgekühlt wird. Durch den Abstand zwischen Tragrohr und Auflagerelement wird auch vermieden, daß ein über dem Tragrohr liegender Streifen des Auflagerelementes und der daraufliegenden Materialschüttung für das nach oben strömende Gas im Windschatten bleibt.

Die gemäß Anspruch 14 als Abstandhalter vorgesehenen Leisten bewirken gleichzeitig eine wirksame Abstützung.

Durch das Merkmal des Anspruchs 15 wird die Montage und insbesondere der Austausch der Auflagerelemente erleichtert.

In Anspruch 16 ist eine bevorzugte Ausführung der Auflagerelemente für die gasdurchlässigen Böden angegeben.

Für die relativ gasundurchlässigen Böden wird die Ausführung gemäß Anspruch 17 empfohlen.

Durch die Unterteilung der Auflagerelemente gemäß Anspruch 18 wird vermieden, daß sich hohe Wärmespannungen aufbauen.

Die Zeichnung dient zur Erläuterung der Erfindung anhand von vereinfacht dargestellten Ausführungsbeispielen.

Figur 1 zeigt einen erfindungsgemäßen Schachtofen teils im Schnitt, teils in Ansicht.
Figur 2 zeigt einen anderen erfindungsgemäßen Schachtofen im Schnitt.

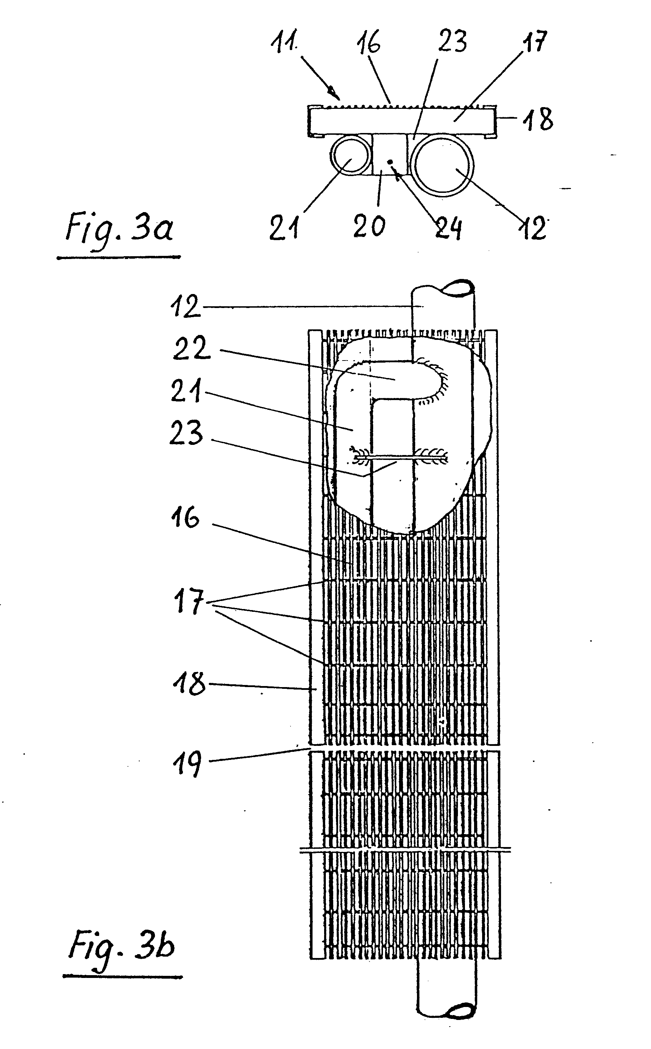

Figur 3a zeigt ein Bodenelement im Schnitt.
Figur 3b zeigt dasselbe Bodenelement in einer Draufsicht, teilweise aufgeschnitten.

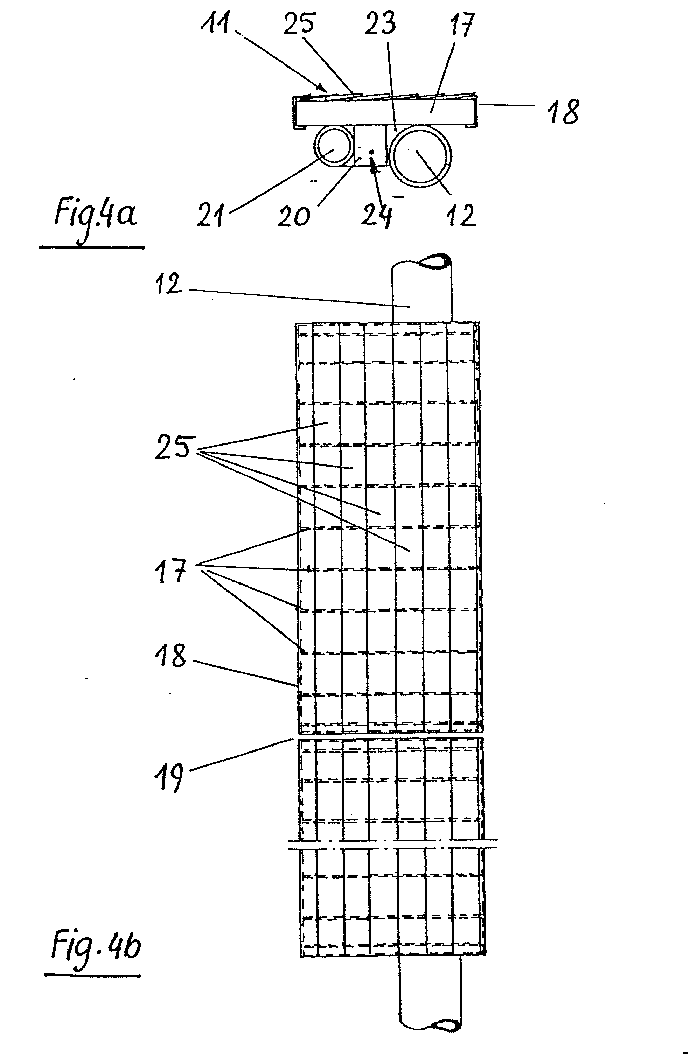

Figur 4a zeigt ein anderes Bodenelement im Schnitt.

Figur 4b zeigt dasselbe Bodenelement in einer Draufsicht.

Figur 5 zeigt ein Verfahrensschema.

Ein Stahlgerüst 1, zu dem mehrere Arbeitsbühnen 2 gehören, trägt und stützt einen gemauerten rechteckigen Schacht 3, von dem in Figur 1 die Seitenwände 3a und 3b im Schnitt erkennbar sind. Die Seitenwand 3b ist mit mehreren verschließbaren Einstiegöffnungen 4 versehen. In mittlerer Höhe ist ein Teil der Vorderwand des Ofens zu sehen. Ober der oberen Schachtöffnung ist ein Beschickungsband 5 unter einem Vorratsbunker 6 hin und her verfahrbar. Das Beschickungsband ist von einem druckdichten Gehäuse 7 umgeben. Das Innere des Schachtes 3 ist durch mehrere - im gezeichneten Ausführungsbeispiel elf - waagerechte Böden 8a bis 8l, die in gleichmäßigen Abständen über die gesamte Höhe verteilt sind, in eine entsprechende Anzahl von etagenartigen Kammern 9a bis 9l unterteilt. Abweichend von dem gezeichneten Ausführungsbeispiel kann die Zahl der Böden auch kleiner sein, vorzugsweise ist sie jedoch noch größer.

Jeder Boden besteht aus mehreren dicht nebeneinander liegenden Bodenelementen 10, die je ein Auflagerelement 11 und ein Tragrohr 12 aufweisen. In der in Figur 1 dargestellten Ruhelage liegen die Auflagerelemente 11 im wesentlichen waagerecht; da sie einander an den Längskanten schuppenartig überlappen, sind sie - genau genommen - leicht geneigt angeordnet. Aus einem weiter unten erkennbaren Grund ist die Oberlappung von Boden zu Boden entgegengesetzt, so daß bei den Böden 8a, 8c usw. jeweils die in Figur 1 rechts liegende Längskante die überlappende Kante ist, bei den Böden 8b, 8d usw. die links liegende Kante.

Die Tragrohre 12 durchdringen die beiden zur Ebene der Figur 1 parallelen Schachtwände und sind drehbar gelagert. Mittels eines Antriebs, bestehend aus einem Hebelgestänge 13 und einer Kolbenzylindereinheit 14, sind die Bodenelemente 10 eines jeden Bodens gemeinsam aus ihrer waagerechten Ruhelage kippbar.

In Figur 1 sind die Antriebe der Einfachheit halber nur exemplarisch für die Böden 8e und 8f dargestellt, von denen nur die nach aussen dringenden Enden der Tragrohre 12 sichtbar sind. Der Antrieb des Bodens 8e ist dabei so angeordnet, daß die Bodenelemente 10 dieses Bodens bei Betätigung der Kolbenzylindereinheit 14 im Gegenuhrzeigersinn kippen; die Bodenelemente 10 des Bodens 8f kippen infolge der entgegengesetzten Anordnung des zugehörigen Antriebs im Uhrzeigersinn. Entsprechend sind die Antriebe der übrigen Böden mit von Boden zu Boden abwechselndem Drehsinn angeordnet. Die beiden seitlichen Schachtwände 3a, 3b sind in Höhe der Böden 8a, 8c usw. bzw. 8b, 8d usw. mit nutenartigen Ausnehmungen 15 versehen, die bei jedem Boden dasjenige seitliche Bodenelement, dessen der Schachtwand 3a bzw. 3b zugekehrte Längskante sich beim Kippen aufwärts bewegt, etwa bis zur Hälfte seiner Breite aufnehmen.

Die mit dem Hebelgestänge 13 verbundenen Enden der Tragrohre 12 sind offen. Auf der gegenüberliegenden, in Figur 1 nicht sichtbaren hinteren Schachtseite sind zumindest die Tragrohre 12 der Böden 8c bis 8i an einen Sammler angeschlossen, der mit der Saugseite eines nicht dargestellten Kühlluftgebläses verbunden ist.

Bei dem in Figur 1 dargestellten Ausführungsbeispiel sind alle Böden mit Ausnahme der Böden 8c und 8i gasdurchlässig. Bei diesen Böden besteht das Auflagerelement 11 aus einem Drahtgitter 16 aus hochhitzebeständigem Stahl. Das Drahtgitter 16 ist durch zahlreiche hochkant stehende Leisten 17 abgestützt, die in kurzen Abständen quer zur Längskante des Auflagerelements 11 angeordnet sind. An den Längsseiten sind U-förmige Profile 18 angebracht, die die Enden der Leisten 17 umgreifen. Das Drahtgitter 16 ist mit den Leisten 17 und den U-Profilen 18 zu einer Baueinheit verbunden. Das Auflagerelement 11 ist in Längsrichtung in mehrere derartige Bauelemente unterteilt, zwischen denen enge Querspalte 19 bestehen. Die Baueinheiten sind durch Laschen 20, die an den Leisten 17 festgeschweißt sind, lösbar mit einem Tragrahmen verbunden.

Der Tragrahmen besteht im wesentlichen aus dem Tragrohr 12, einem Versteifungsrohr 21 und zwei Verbindungsrohren 22, die von den Enden des Versteifungsrohres 21 ausgehen und in das Tragrohr 12 münden. Zwischen Tragrohr 12 und Versteifungsrohr 21 sind noch eine Anzahl von Querstegen 23 eingeschweißt, an denen die Laschen 20 z. B. durch Stifte 24 befestigt sind. Der Durchmesser des Tragrohres 12 ist entsprechend der größeren Belastung einschließlich der beim Kippen auftretenden Torsionsbelastung etwas größer als der des Versteifungsrohres 21. Der Abstand der beiden Rohrachsen ist etwa gleich der halben Breite des Auflagerelements 11. Die Rohrachsen sind symmetrisch zur Mittelebene des Auflagerelements 11 angeordnet. Durch diese konstruktive Gestaltung werden die maximalen Biegemomente, denen die Leisten 17 bei Belastung ausgesetzt sind, möglichst klein gehalten.

Die Bodenelemente 10 der relativ gasundurchlässigen Böden 8c und 8i unterscheiden sich von den bisher beschriebenen Bodenelementen der übrigen Böden dadurch, daß das Auflagerelement 11 aus mehreren nebeneinander an den Längskanten überlappenden schmalen Blechstreifen 25 besteht.

Unter dem Boden 8i ist an den Stahlträgern, auf denen das Schachtmauerwerk ruht, ein Trichter 26 aufgehängt, der in etwa halber Höhe mit einer seitlichen Öffnung 27 versehen ist. Der Trichter 26 weist einen Ausfallstutzen 28 auf, der mit einer Ausfallschleuse 29 ausgestattet ist.

Durch die relativ gasundurchlässigen Böden 8c und 8i ist das Innere des Schachtes 3 in drei Zonen 30, 31, 32 unterteilt, die am rechten Rand der Figur 1 durch geschweifte Klammern angedeutet sind. Die Zone 30 ist die Vorwärmzone. Die Zone 31 ist die Reaktionszone. Darunter ist die Kühlzone 32. Jede einzelne Zone ist mit einem Einlass für von außen zugeführtes gasförmiges Medium und mit einem Auslass für das Abgas versehen. Die Öffnung 27 bildet den Einlass für die der Kühlzone 32 zuzuführende Umgebungsluft. Die Wand der Kammer 9k ist mit einem Auslass 33 für das Abgas der Kühlzone 32 versehen.

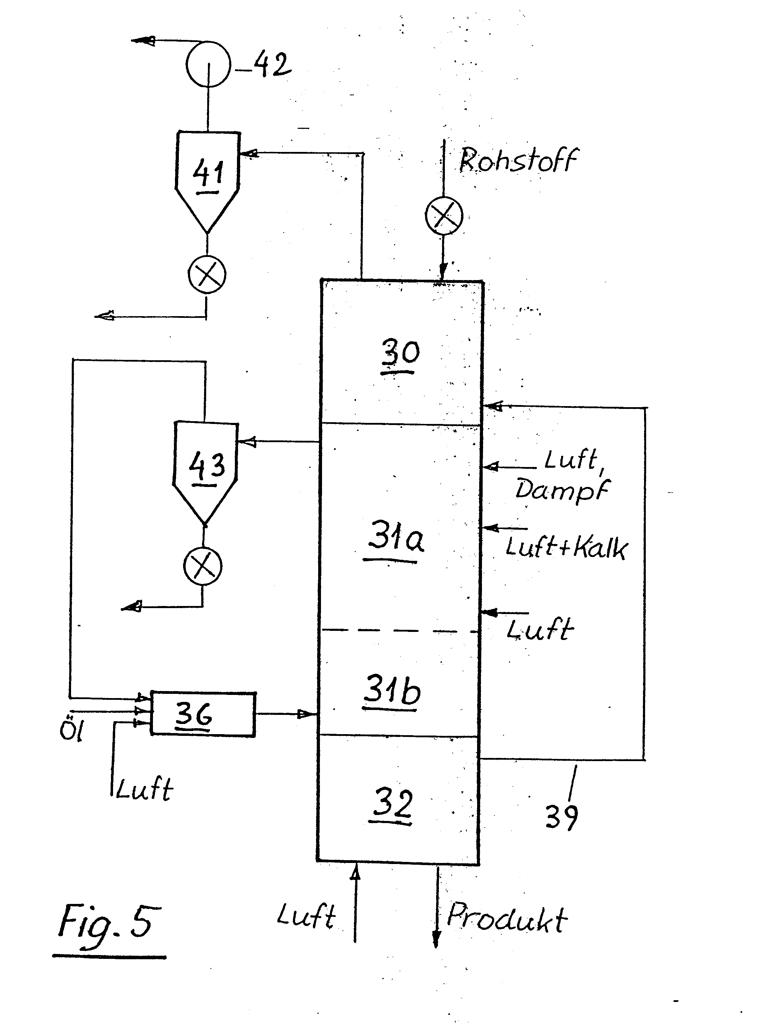

Die Kammer 9i, d. h. die unterste Kammer der Reaktionszone 31, ist durch eine kurze gemauerte Leitung 34, die in den Einlass 35 mündet, mit einem Ölbrenner 36 verbunden, der ausserhalb des Schachtes 3 angeordnet ist. Ausserdem ist die Reaktionszone 31 über Zuleitungsrohre mit einem ausserhalb des Schachtes befindlichen Luft- und/oder Dampfversorgungssystem verbunden, das in Figur 1 nicht dargestellt, jedoch in Figur 5 angedeutet ist. In der Wand der obersten Kammer 9c der Reaktionszone 31 sind Auslässe 37 für das Abgas dieser Zone vorgesehen. Die Vorwärmzone 30 hat einen Einlass 38, der über eine ausserhalb des Schachtes 3 angeordnete Leitung 39 mit dem Auslass 33 der Kühlzone 32 verbunden ist. Die oberste Kammer 9a ist mit Auslässen 40 für das Abgas der Vorwärmzone versehen.

Im Betrieb werden die Antriebe der einzelnen Böden in vorgegebenen konstanten Zeitabständen nacheinander eingeschaltet, so daß jeweils alle Elemente des zugehörigen Bodens im gleichen Drehsinn um etwa 90° oder mehr gedreht werden und anschließend wieder in die Ruhelage zurückkehren. Die Steuerung aller Antriebe erfolgt über ein gemeinsames Zeitschaltwerk. Die Einschaltphasen der einzelnen Antriebe sind zueinander verschoben, so daß die Einschaltphase eines Antriebes jeweils unmittelbar nach dem Ende der Einschaltphase des Antriebs des darunterliegenden Bodens beginnt.

DasRohmaterial wird aus dem Vorratsbunker 6, in dem zwecks Abdichtung stets automatisch eine Mindestfüllmenge aufrechterhalten wird, mit dem Beschickungsband 5 kontinuierlich dem obersten Boden 8a zugeführt. Dabei fährt das Beschickungsband 5 mit gleichmäßiger Geschwindigkeit hin und her, so daß sich über der Bodenfläche eine gleichmäßige Schichtdicke ergibt. Nach Erreichen der vorgegebenen Schichthöhe werden gleichzeitig die Bodenelemente 10 des Bodens 8a gekippt. Infolge der Kippbewegung fällt das Material auf den nächsten Boden 8b, der gerade eine Kippbewegung mit entgegengesetztem Drehsinn ausgeführt hat und in die Ruhestellung zurückgekehrt ist. Nach einer vorgegebenen Verweilzeit werden die Bodenelemente 10 des Bodens 8b in gleicher Weise gekippt. Dieser Vorgang wiederholt sich bei den weiter unter liegenden Böden 8c, 8d, ...8l.

So durchwandert das Material schrittweise den Schacht 3 von oben nach unten und gelangt schließlich in den Trichter 26, aus dem es dann ausfällt. Die Gesamtverweilzeit hängt von der Zahl der Böden und von der Periodendauer zwischen zwei aufeinanderfolgenden Kippbewegungen der Bodenelemente 10 ab. Bei elf Böden und einer Periodendauer von zehn Minuten beträgt die Verweilzeit z. B. 110 Minuten.

In die Vorwärmzone 30 wird über die Leitung 39 und den Einlass 38 die auf etwa 450°C erwärmte Luft aus der Kühlzone 32 eingeleitet. Sie durchdringt nacheinander den Boden 8b mit der darauf ruhenden Materialschicht und den Boden 8a mit darauf liegender frischer Materialschicht. Über einen Staubabscheider 41 und einen Ventilator 42 gelangt sie mit einer Temperatur von etwa 120°C ins Freie. Durch die Berührung mit der erwärmten Luft wird das Material getrocknet und bis auf knapp 400°C erwärmt. Die Vorwärmtemperatur ist nach oben durch die Bedingung begrenzt, daß noch keine flüchtigen, teerartigen Bestandteile ausgetrieben werden. Diese würden nämlich im Abluftsystem wieder kondensieren und zu Verstopfungen und Betriebsstörungen führen.

Das vorgewärmte Material gelangt in die Reaktionszone 31. Diese ist in Figur 5 in eine obere Teilzone 31a und eine untere Teilzone 31b unterteilt. Im oberen Bereich der Teilzone 31a werden die flüchtigen Bestandteile ausgetrieben und die Gase verbrannt. Im unteren Bereich der Teilzone 31a werden die festen Brennstoffbestandteile verbrannt. In der unteren Teilzone 31b erfolgt die eigentliche Keramisierung.

Die exakte Steuerung der verschiedenen Reaktionsabläufe erfolgt mit Hilfe der Gasströme, die der Reaktionszone 31 zugeführt werden. Durch den Einlass 35 wird ein Heißgasstrom von 1200 bis 1300°C in den unteren Bereich der Teilzone 31b eingeführt. Mit diesem Gas wird das Material auf die vorbeschriebene Keramisierungstemperatur gebracht, die im allgemeinen bei etwa 950 - 1000°C liegt und in jedem Einzelfall durch Versuche zu ermitteln ist.

Durch Zuleitungsrohre, die nicht im einzelnen dargestellt sind, wird im unteren Bereich der Teilzone 31a Luft eingeblasen. Die Luft dient einerseits als Verbrennungsluft; daher ist die Luftmenge zumindest stöchiometrisch im Verhältnis zu dem vorhandenen Brennstoff. Andererseits dient die Luft als Kühlluft, um die maximale Temperatur in der Teilzone 31a unter etwa 800°C zu halten; sie darf in dieser Teilzone keinesfalls die Keramisierungstemperatur erreichen.

Durch nicht dargestellte Düsen wird weitere Luft als Trägergas für den zur Einbindung des Schwefels dienenden Kalk eingeblasen. Wichtig ist, daß auch im oberen Bereich der Teilzone 31a ein ausreichendes Sauerstoffangebot aufrechterhalten wird. In diesem Bereich sollen die vergasten Bestandteile möglichst restlos verbrannt werden, um die Verschmutzung des Abgassystems durch Kondensationsprodukte so gering wie möglich zu halten. Daher wird erforderlichenfalls weitere Luft zugeführt. Es ist aber auch möglich, an dieser Stelle Wasserdampf als Kühlmittel einzublasen.

Das Abgas verläßt die Reaktionszone durch den Auslass 37 mit einer Temperatur von rund 800°C. Nach Entstaubung in dem Zyklon 43 gelangt ein Teilstrom zu dem Brenner 36. Dort werden ihm zwecks Temperaturerhöhung auf 1200 bis 1300°C die Rauchgase des Brenners 36 beigemischt. Der so erzeugte Gasstrom wird in die Teilzone 31b zurückgeführt. Das restliche Abgas kann - gegebenenfalls nach weiterer Reinigung - z. B. einem Dampferzeuger zugeführt werden. Dem Brenner 36 kann z. B. - ohne das dies in der Zeichnung dargestellt ist - die aus den Tragrohren 12 abgesaugte Kühlluft als vorgewärmte Verbrennungsluft zugeführt werden, ebenso auch ein aus der Leitung 39 abgezweigter Teilstrom.

Das heiße keramisierte Material wird in der Kühlzone durch einen bei 27 eintretenden Frischluftstrom auf etwa 150°C abgekühlt. Dabei erwärmt sich die Kühlluft auf die für die Vorwärmung erforderliche Temperatur von etwa 450°C.

0169982

Als wesentlicher Vorteil des erfindungsgemäßen Schachtofens ist neben der exakten Verfahrensführung insbesondere auch der gute thermodynamische Wirkungsgrad hervorzuheben.

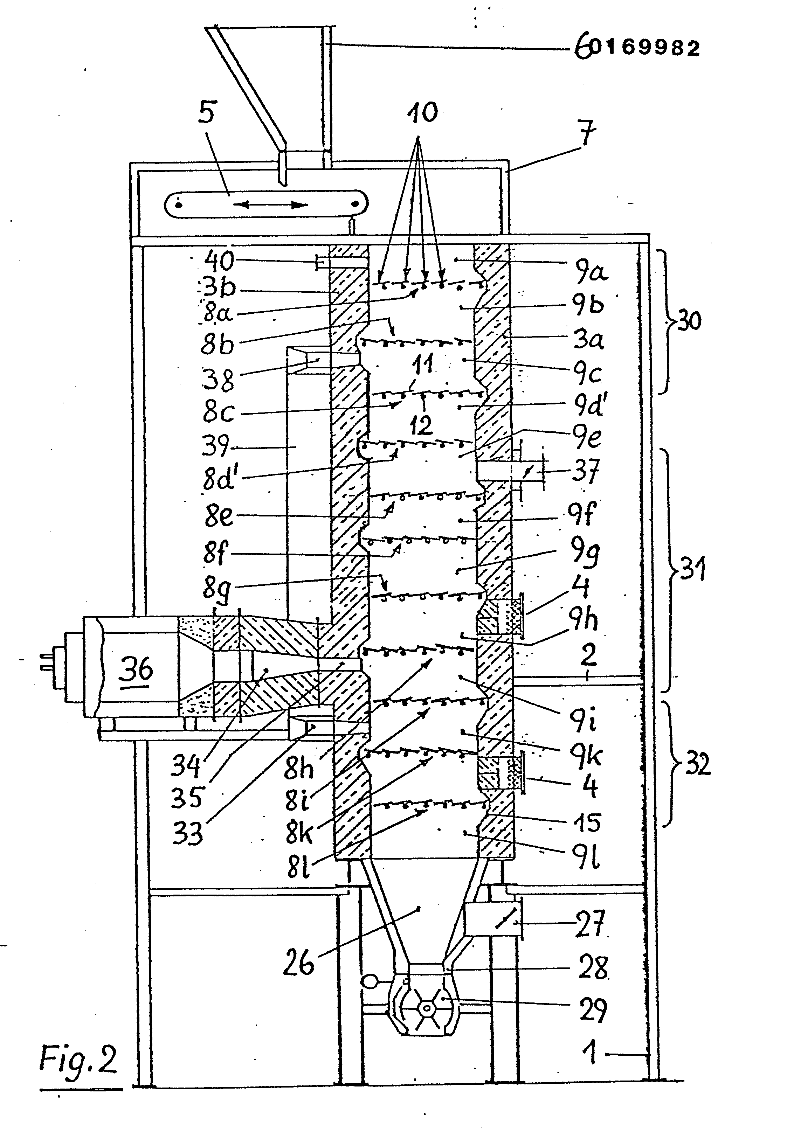

Der in Figur 2 dargestellte Schachtofen unterscheidet sich von dem Schachtofen gemäß Figur 1 insbesondere dadurch, daß ausser den Böden 8c und 8i auch der Boden 8d' relativ gasundurchlässig ist. Die Reaktionszone 31 reicht in diesem Falle oben nur bis zum Boden 8d'. Dementsprechend befindet sich der Gasauslass 37 der Reaktionszone 31 in der Wand der Kammer 9e. Die Kammer 9d' ist eine Schleusenkammer und hat weder einen Gaseinlass noch einen Gasauslass. Natürlich kann eine derartige Schleusenkammer auch zwischen Reaktionszone 31 und Kühlzone 32 vorgesehen werden.

Durch die Zwischenschaltung von Schleusenkammern läßt sich die Trennung der Gaskreisläufe der einzelnen Zonen noch vervollkommnen.

Krefeld, den 22. April 1985
973-PAT/LIZ - PL/h.- A 84/05 EU

Deutsche Babcock Anlagen
Aktiengesellschaft
Duisburger Straße 375
4200 Oberhausen 1

Patentansprüche

1. Schachtofen zur kontinuierlichen Wärmebehandlung keramischer, insbesondere brennstoffhaltiger Schüttgüter in mindestens zwei aufeinanderfolgenden Verfahrensstufen unter Verwendung und gegebenenfalls Entwicklung von Gasen mit folgenden Merkmalen:

a) Das Innere des Schachtes (3) ist durch eine Anzahl von waagerechten Böden (8a bis 8l) in mehrere Kammern (9a - 9l) unterteilt;

b) jeder Boden (8a - 8l) besteht aus einer Mehrzahl von langgestreckten, eng nebeneinanderliegenden Bodenelementen (10);

c) die einzelnen Bodenelemente sind um eine zu ihrer Längskante parallele Achse kippbar;
gekennzeichnet durch folgende Merkmale:

d) das Innere des Schachtes (3) ist in mindestens zwei Zonen (30; 31, 32) unterteilt, die durch mindestens einen relativ gasundurchlässigen Boden (8c, 8i) voneinander getrennt sind;

e) jede Zone (30, 31, 32) hat in ihrem unteren Bereich einen Einlass (38, 35, 27) für von außen zugeführtes Gas und in ihrem oberem Bereich einen Auslass (40, 37, 33) für das Abgas;

f) jede Zone hat mindestens einen Boden (8a, 8b; 8d - 8h; 8k, 8l) mit Öffnungen für den Durchtritt von Gas.

- 15 -

0169982

2. Schachtofen nach Anspruch 1, dadurch gekennzeichnet, daß sich zwischen je 2 benachbarten Zonen eine durch zwei relativ gasundurchlässige Böden gebildete Schleusenkammer befindet.

3. Schachtofen nach Anspruch 1 oder 2, gekennzeichnet durch insgesamt drei Zonen, und zwar eine Vorwärmzone (30), eine Reaktionszone (31) und eine Kühlzone (32).

4. Schachtofen nach Anspruch 3, dadurch gekennzeichnet, daß im Bereich der Reaktionszone (31) zusätzliche Mittel zum Einblasen gasförmiger Medien vorgesehen sind.

5. Schachtofen nach Anspruch 3 oder 4, dadurch gekennzeichnet, daß der Auslaß (33) der Kühlzone (32) durch eine Leitung (39) mit dem Einlaß (31) der Vorwärmzone (30) verbunden ist.

6. Schachtofen nach einem der Ansprüche 3 bis 5, dadurch gekennzeichnet, daß von dem Auslaß (37) der Reaktionszone (31) eine Abgasleitung zu einem Brenner (36) geführt ist und daß eine von dem Brenner (36) ausgehende Leitung (34) für das mit dem Rauchgas des Brenners (36) gemischte Abgas in den Einlaß (35) der Reaktionszone (31) mündet.

7. Schachtofen nach einem der Ansprüche 1 bis 6, dadurch gekennzeichnet, daß der Drehsinn, mit dem die Bodenelemente (10) kippbar sind, von Boden zu Boden abwechselt.

8. Schachtofen nach einem der Ansprüche 1 bis 7, dadurch gekennzeichnet, daß bei jedem Boden (8a bis 81) dasjenige seitliche Bodenelement (10), dessen der Schachtwand (3a, 3b) zugekehrte Längsseite sich beim Kippen aufwärts bewegt, etwa bis zu seiner halben Breite von einer Ausnehmung (15) der Schachtwand (3a, 3b) aufgenommen wird.

9. Schachtofen nach einem der Ansprüche 1 bis 8, dadurch gekennzeichnet, daß jedes Bodenelement (10) ein flaches Auflageelement (11) und ein drehbar gelagertes, durchgehendes Tragrohr (12) aufweist.

10. Schachtofen nach Anspruch 9, dadurch gekennzeichnet, daß zumindest die Tragrohre (12) der zur Reaktionszone (31) gehörenden Böden (8a bis 8h) von einem Kühlmedium durchströmt sind.

11. Schachtofen nach Anspruch 10, dadurch gekennzeichnet, daß das Tragrohr (12) mit einem Versteifungsrohr (21) und Verbindungsrohren (22), die von den Enden des Versteifungsrohres (21) ausgehen und in das Tragrohr (12) einmünden, einen Tragrahmen bildet.

12. Schachtofen nach Anspruch 11, dadurch gekennzeichnet, daß der Achsabstand zwischen Tragrohr (12) und Versteifungsrohr (21) etwa der halben Breite des Auflagerelementes (11) entspricht und die Auflagepunkte symmetrisch zur Mittelebene des Auflagerelementes (11) liegen.

13. Schachtofen nach einem der Ansprüche 9 bis 12, dadurch gekennzeichnet, daß zwischen Auflagerelement (11) und Tragrohr (12) und gegebenenfalls Versteifungsrohr (21) Abstandshalter vorgesehen sind.

14. Schachtofen nach Anspruch 13, dadurch gekennzeichnet, daß als Abstandshalter rechtwinklig zum Tragrohr (12) angeordnete, hochkant stehende Leisten (17) vorgesehen sind, die sich über die Breite des Auflagerelementes (11) erstrecken.

15. Schachtofen nach Anspruch 14, dadurch gekennzeichnet, daß die Auflagerelemente (11) mit den Leisten (17) eine Baueinheit bilden, die lösbar mit dem aus Tragrohr (12) und Versteifungsrohr (21) gebildeten Tragrahmen verbunden ist.

16. Schachtofen nach einem der Ansprüche 9 bis 15, dadurch gekennzeichnet, daß die Auflageelemente (11) der gasdurchlässigen Böden (8a, 8b; 8d bis 8h; 8k, 8l) aus Drahtgittern (16) bestehen.

17. Schachtofen nach einem der Ansprüche 9 bis 15, dadurch gekennzeichnet, daß die Auflagerelemente (11) der gasundurchlässigen Böden (8c, 8i) aus überlappt angeordneten Blechstreifen (25) bestehen.

18. Schachtofen nach einem der Ansprüche 9 bis 17, dadurch gekennzeichnet, daß das Auflagerelement (11) in Längsrichtung unterteilt ist.

Fig. 1

Fig.2

0169982

*3/5*

**0169982**

Fig. 3a

Fig. 3b

0169982

Fig.4a

Fig.4b

0169982

Rohstoff

42

41

30

31a

Luft,
Dampf

Luft+Kalk

43

Luft

31b

Öl

36

Luft

32

39

Luft

Produkt

**Fig. 5**